# EUROPEAN PATENT APPLICATION

(11) **EP 2 535 725 A1**
(43) Date of publication of application: **19.12.2012**
(21) Application number: 11170330.2
(22) Date of filing: 17.06.2011
(51) Int. Cl.: G01Q 60/30, G01Q 60/38, G01Q 70/10, B82Y 35/00

(54) **A probe for scanning probe microscopy**

(71) Applicant: IMEC, 3001 Leuven (BE)
(72) Inventor: Hantschel, Thomas, B-2235 HOUTVENNE (BE); Vandervorst, Wilfried, B-2800 MECHELEN (BE)
(74) Representative: pronovem

(57) **Abstract**

The present invention is related to a probe for surface analysis by Atomic Force Microscopy. The tip body comprises at least a top portions formed of a rectangular ground plane, two trapezoidal side planes and two triangular side planes, with a straight line-shaped edge (11). One of the end points (18) of said edge serves as the tip point when the tip is held at an angle between the edge (11) and the surface to be scanned. The tip of the invention is obtainable by a process wherein a mold is produced by wet anisotropic etching through a rectangular or ellipse-shaped hardmask. The tip body is arranged on a cantilever, with the edge parallel or at an angle to the longitudinal direction of the cantilever. According to an embodiment in which the tip must be at an angle to said cantilever direction, the tip may have a rectangular top surface (20) instead of a straight line-shaped edge. The invention is equally related to a method for producing a probe according to the invention.

## Description

### Field of the Invention

The present invention is related to scanning probe microscopy of the type known as Atomic Force Microscopy (AFM). The invention is related to a probe suitable for AFM, and in particular for Scanning Spreading Resistance Microscopy (SSRM).

### State of the art.

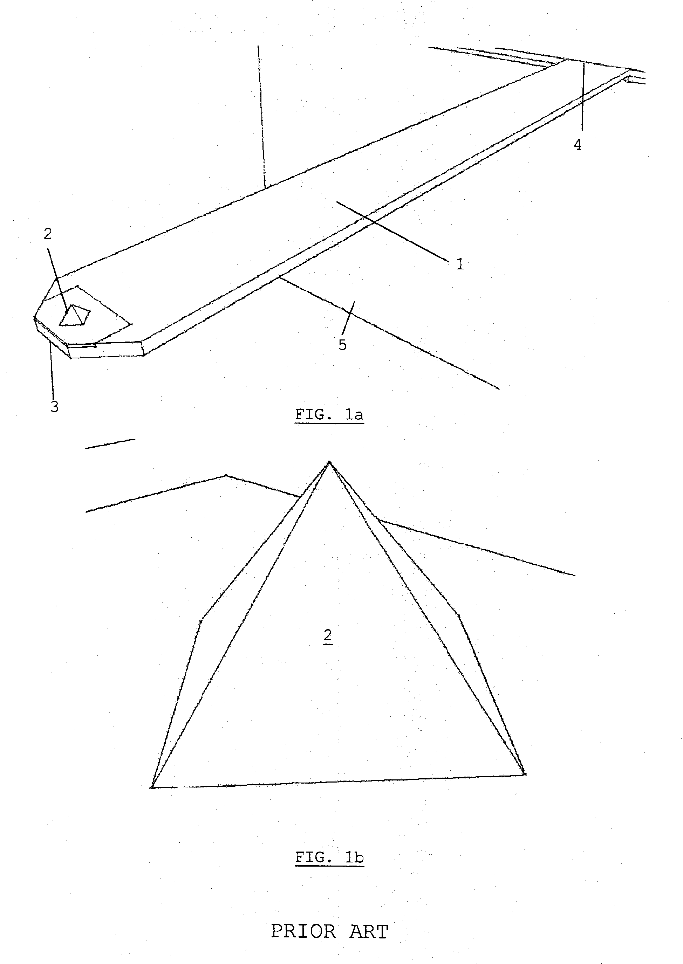

Figure 1 shows an example of an AFM probe as known in the art, comprising a cantilever 1, e.g. made from metal, nitride, oxide or silicon, with a pyramid shaped tip 2 arranged at the distal end 3 of the cantilever, the cantilever being attached at its base 4 to a holder chip 5. The tip material can be e.g. diamond, metal or nitride. Pyramidal tips made from boron-doped diamond have demonstrated a superior spatial resolution in scanning spreading resistance microscopy (SSRM). SSRM is based on atomic force microscopy (AFM) and is today a leading technique for two-dimensional (2D) carrier profiling of state-of-the-art nanoelectronics device structures. In SSRM, the conductive tip is scanning over the sample surface while measuring the local spreading resistance. The pyramidal tips are formed by a molding procedure whereby first a pyramidal etch pit in silicon is formed by anisotropic etching. Then, the etch pit is filled with diamond and finally the silicon mold material is etched away. One requirement for obtaining high-resolution tips is the need for a perfectly square opening of the hardmask. This requires an expensive lithography mask for obtaining a highly symmetrical pattern but it is never perfect. The challenge is to define (and etch) an e.g. 10x10 µm² opening with a 1 nm precision. In practice, the hardmask opening will always be slightly non-symmetric (caused by non-symmetric lithography mask pattern, resist development, opening of the hardmask, etc.) leading to a so-called knife-shape edge of the tip. Although this can be optimized to a certain degree, it is on the nanometre scale unpredictable, the knife edge is oriented randomly in x or y direction (i.e. in a plane parallel to the ground plane of the pyramid) and impacts the overall tip yield. Moreover, the complete filling of the pyramidal etch pits is often hindered by diamond grains blocking the apex region during growth before it has been filled completely which also causes yield losses. Also, the probe lifetime of common pyramidal tips is very short (typically one day) and probes need to be changed often which is a particular problem in ultra-high vacuum (UHV) systems where probe change is complicated and time consuming.

### Summary of the invention

The invention is related to a probe according to the appended claims. As such the invention is related to a probe for surface analysis by Atomic Force Microscopy, comprising:
- a holder chip,
- a cantilever having a base end attached to said holder chip and a distal end extending away from said holder chip,
- a probe tip, said probe tip being arranged near the distal end of the cantilever,
wherein said probe tip is shaped as a solid body comprising at least a top portion, said top portion comprising:
- a rectangular ground plane, said ground plane having two long sides and two short sides, a first short side being placed closer to the distal end of the cantilever, and a second short side being placed further away from said cantilever's distal end,
- a straight line-shaped edge, oriented parallel to said long sides,
- two trapezoidal side surfaces extending between the line-shaped edge and the long sides of the ground plane, and two triangular side surfaces extending between the end points of the line-shaped edge (11) and the short sides of the ground plane, the end point closest to the cantilever's distal end forming the contact point of the probe when the probe is placed in contact with a surface to be analysed.

According to an embodiment, said rectangular ground plane is oriented in the cantilever's longitudinal direction.

According to another embodiment, said ground plane is oriented at an angle to the cantilever's longitudinal direction.

The invention is equally related to a probe for surface analysis by Atomic Force Microscopy, comprising:
- a holder chip,
- a cantilever having a base end attached to said holder chip and a distal end extending away from said holder chip,
- a probe tip, said probe tip being arranged near the distal end of the cantilever,
wherein said probe tip is shaped as a solid body comprising at least a top portion, said top portion comprising:
- a rectangular ground plane, said ground plane having two long sides and two short sides, a first short side being placed closer to the distal end of the cantilever, and a second short side placed further away from said cantilever's distal end, said rectangular ground plane being oriented at an angle to the longitudinal direction of the cantilever,
- a rectangular top surface in a plane parallel to the ground plane, and having long sides and short sides being respectively parallel to the long sides and short sides of the ground plane,
- four trapezoidal side surfaces extending between the rectangular top surface and the ground plane, wherein the corner point of said rectangular top surface that is closest to the cantilever's distal end is suitable for forming the contact point of the probe when the probe is placed in contact with a surface to be analysed.
The embodiment of the previous paragraph and the embodiment wherein the tip has a straight line-shaped edge both represent the inventive concept of the invention, which is to provide a tip shape that provides accuracy combined with a more straightforward production process.

According to an embodiment, the length of said straight line-shaped edge or of said rectangular top surface is at least 0.1micron.

The probe of the invention may be re-usable by cutting off a portion of the tip and cantilever at the distal end of said cantilever.

A probe of the invention may comprise a plurality of said probe tips placed in a row oriented in the cantilever's longitudinal direction, and wherein the probe is re-usable by cutting off a portion of the cantilever, in between two adjacent probe tips.

The invention is equally related to an apparatus for AFM analysis, wherein a re-usable probe as described in the previous paragraph can be applied, said apparatus being equipped with a means for cutting off a portion of said probe. Said cutting means may be a Focused Ion Beam (FIB) tool.

According to an embodiment, said tip further comprises a base portion, having a rectangular base plane, four trapezoidal side surfaces and a rectangular top plane, said top plane forming the ground plane of said top portion, said four trapezoidal side surfaces being inclined at a less steep angle than the side surfaces of the top portion.

In a probe according to the invention, said probe tip may be a diamond probe tip, wherein diamond nano-crystals are present on the end point of said line-shaped edge which is closest to the distal end of the cantilever or on the corner point of said rectangular top surface which is closest to the distal end of the cantilever.

The invention is furthermore related to a method for producing a probe for atomic force microscopy, comprising the steps of :
- providing a substrate,
- producing a mold in said substrate, by wet anisotropic etching, using a hardmask having a rectangular or ellipse-shaped opening, wherein said etching is continued until a line or a elongate rectangular surface is formed at the bottom of said mold, said line or said elongate surface being parallel to the longitudinal direction of said rectangular or ellipse-shaped opening,
- filling said mold with tip material to form a tip,
- removing said tip from said mold,
- attaching said tip to a cantilever.

According to a preferred embodiment of the method of the invention, the length of said line or said elongate rectangular surface is at least 0.1micron.

According to an embodiment, said tip is attached to the cantilever so that said line or said elongate rectangular surface is at an angle to the longitudinal direction of the cantilever. According to another embodiment, a line is formed in the bottom of said mold, and said tip is attached to the cantilever so that said line is parallel to the longitudinal direction of the cantilever.

The method of the invention may further comprise the step of sharpening the tip of said mold, prior to the step of filling said mold with tip material.

### Brief description of the figures

Figure 1a-1b illustrate a pyramidal probe as known in the art.

Figures 2a-2d show a probe according to a preferred embodiment of the invention.

Figure 3a-3b shows an alternative orientation of a probe tip according to the invention.

Figure 4 shows another embodiment according to the invention.

Figures 5 and 6a-6d illustrate an embodiment of a re-usable probe according to the invention.

Figure 7 shows another embodiment of a reusable probe.

Figure 8 shows an embodiment of a sharpened probe according to the invention.

### Detailed description of the invention

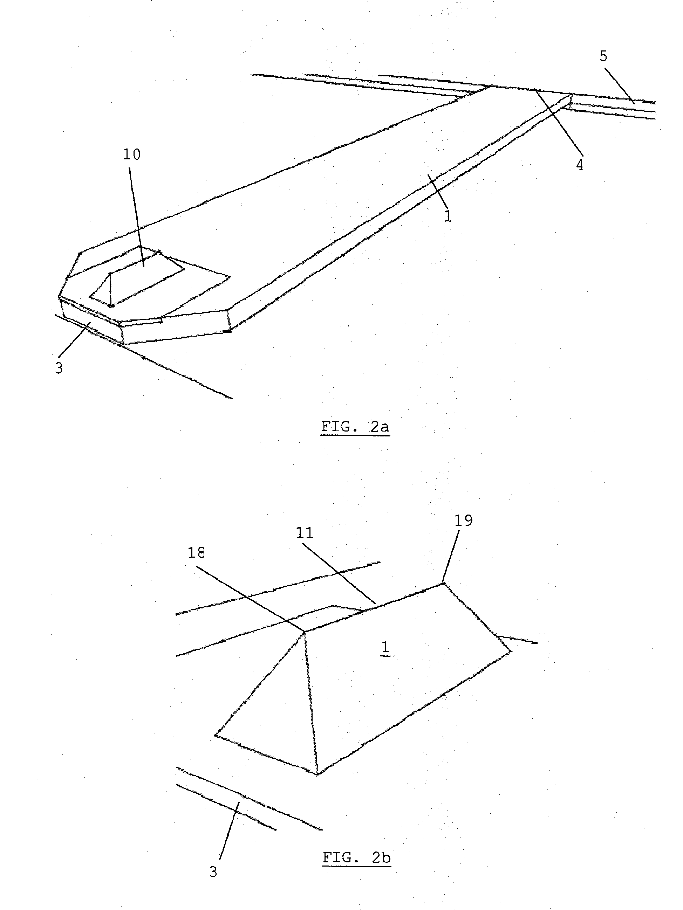

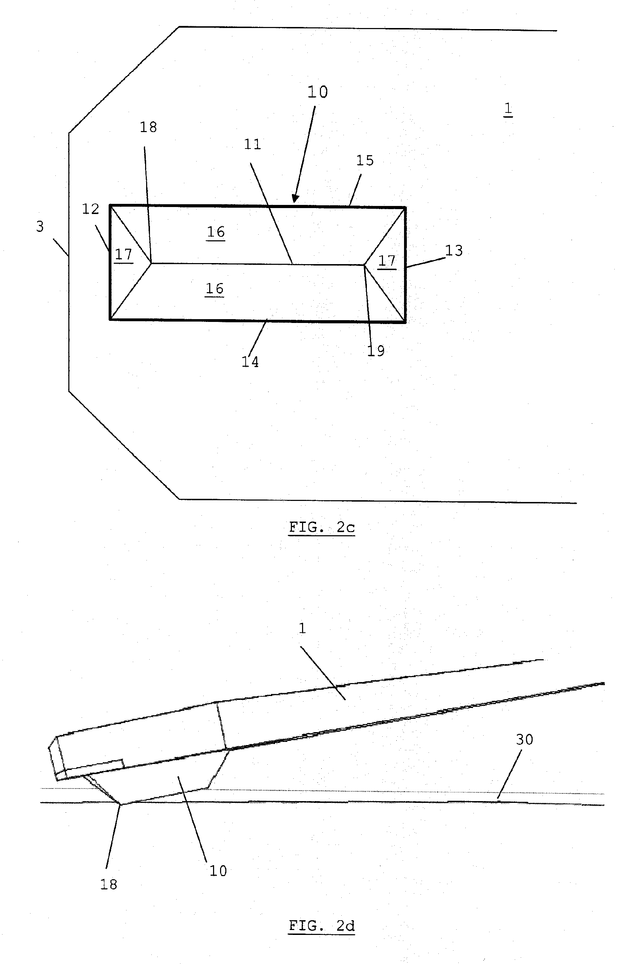

Figures 2a-2b show a probe according to a preferred embodiment of the invention. The cantilever 1 may be the same as in prior art probes, i.e. extending between a base end 4 attached to a holder chip 5, and a distal end 3. The tip 10 has the shape of a pyramid with a line-shaped straight edge 11 instead of a point, the straight edge 11 being parallel to the ground plane of the pyramid and extending in the longitudinal direction of the cantilever 1. In more general terms, and with reference to the plane view of the tip 10 shown in figure 2c, the tip 10 has the shape of a solid body defined by a rectangular ground surface, said surface having two short sides 12/13 and two long sides 14/15, the first short side 12 being placed nearest the distal end 3 of the cantilever 1, the second short side 13 being placed further away from said distal end. The tip 10 comprises two trapezoidal side surfaces 16 and two triangular side surfaces 17, the trapezoidal side surfaces being joined by the straight edge 11, the triangular surfaces' apex points coinciding with the end points 18/19 of the straight edge 11. The length of the straight edge 11 is preferably at least 0,1µm and may be several micrometers. Most preferably, said length is between 0.1**µ**m and 10**µ**m. The straight edge 11 is thus terminated by a first and second tip point, one tip point 18 being placed nearest the distal end 3 of the cantilever, the other tip point 19 being placed further away from said distal end. The distal tip point 18 closest to the cantilever's distal end 3 serves as the probe tip during an AFM measurement, by orienting the cantilever at an angle with respect to the surface of a sample to be analysed, see figure 2d. Said angle is typically between 8° and 12°. Only the distal tip 18 is in contact with the sample surface 30.

Like the single tip pyramids of the prior art, the straight-edged tip 10 of the above-described embodiment of the invention can be produced by anisotropic wet etching to form a mold in a first substrate, e.g. a silicon substrate, the shape of the mold being defined by an opening in a resist layer. Said opening in the resist layer is in turn defined by a hardmask. The mold is then filled with tip material, after which the tip is released from the mold. In the method for producing the tip of the invention, a rectangular hard mask opening instead of a square mask opening is preferably used. By 'rectangular' is meant a shape with a significant and deliberately chosen difference between the length of the short and long sides. As a result, the anisotropic etch results in a straight line at the bottom of the mold, said line being parallel to the longitudinal direction of the hardmask opening. The tip 10 produced by filling said mold has a sharp line-shaped edge 11, said edge 11 having a pre-defined orientation with respect to the rectangular ground plane of the tip, said orientation being defined by the longitudinal direction of the rectangular opening in the hardmask. Using this approach allows to use cheaper lithography masks (no requirement for highly symmetrical mask openings) and conventional mask aligners instead of high-resolution steppers, and enables a large processing window (resist development and hard mask etching contribute also to non-symmetrical openings). It is to be noted also that the straight edge shape facilitates a better filling of the apex region with diamond as it is more accessible in the direction of the straight edge. Instead of a rectangular hardmask, the hardmask may have the shape of an ellipse. The result is also a mold with the negative shape of the tip 10 shown in figure 2B. The rectangular base of the tip is then the rectangle that fits around the ellipse.

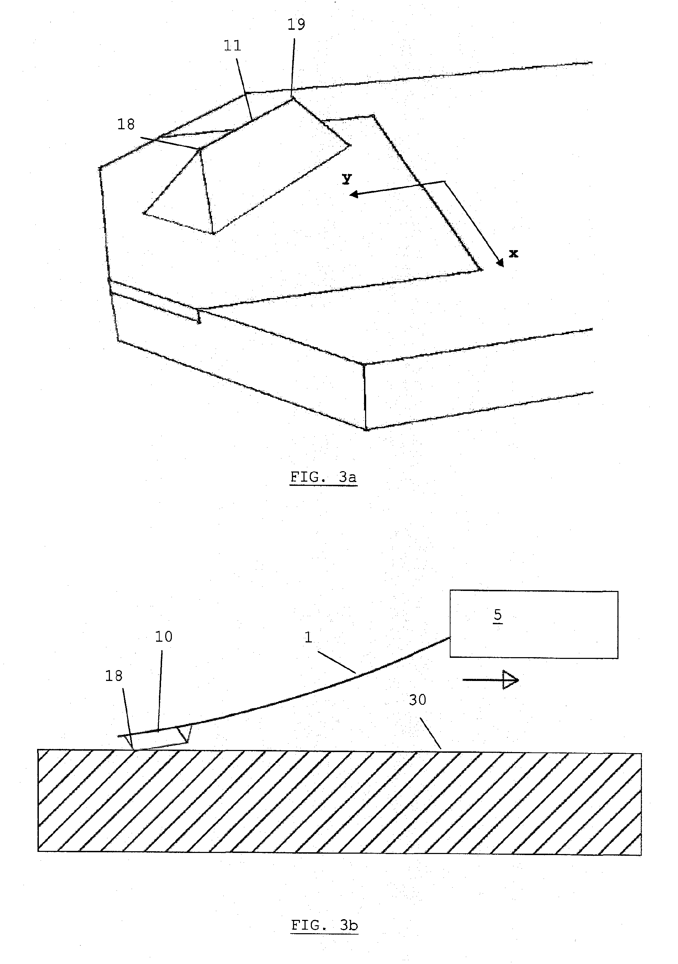

According to another embodiment, the straight-edged tip 10 is not placed parallel to the cantilever's longitudinal direction, but at an angle to said direction. This embodiment is illustrated in figure 3a. The longitudinal direction of the cantilever is indicated as direction y. This orientation of the tip 10 still allows a point contact via the distal tip point 18 with the sample, when the cantilever is held at an angle to the sample surface. The angle between the straight edge 11 and the cantilever's longitudinal direction is higher than 0° and lower than 90°, preferably said angle is about 45°. This embodiment is beneficial in that it helps to reduce the risk of getting a multiple-tip contact when the cantilever becomes bent in de direction of the sample during the probe's movement over het sample surface, as illustrated in figure 3b.

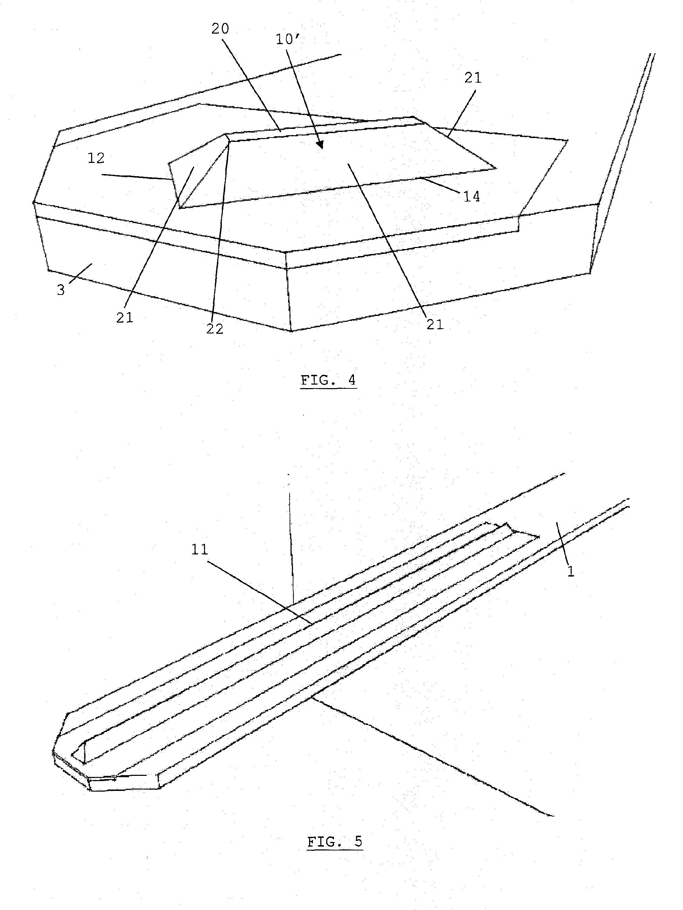

Another embodiment is shown in figure 4. In this embodiment, the tip 10' is oriented at an angle to the cantilever's longitudinal direction y, while the tip does not have a straight line-shaped edge at the top of the pyramid, but an elongate rectangular surface 20, oriented essentially parallel to the pyramid's ground plane, the sides of the top surface 20 being also parallel to the respective sides of the rectangular ground plane. The tip shape thus resembles the shape of a truncated pyramid. In more general terms, the tip has a rectangular ground surface, again with short side 12/13 and long sides 14/15 (only 12 and 14 visible in figure 4), one short side 12 being closer to the cantilever's distal end 3 than the other 13. The tip 10' further has a rectangular top surface 20 parallel to the ground surface, and trapezoidal side surfaces 21 on all four sides. Through the position of the pyramid at an angle to the cantilever's longitudinal direction, one corner point 22 of the rectangular surface 20 extends further outwards in the longitudinal direction of the cantilever than the rest of said surface, and therefore forms a single contact point when the probe is held at an angle (as in figure 2b) with respect to a sample surface. The probe 10' according to this embodiment can be produced by making a mold through anisotropic wet etching with the negative imprint of the probe, i.e. having also a rectangular surface at the bottom of the mold, instead of a straight line. This mold shape facilitates the filling of the tip region with tip material, e.g. diamond, as it is more accessible during growth of the tip material compared to the sharp-edged tip shape. The mold for producing a tip according to this embodiment is produced by wet etching until an elongated rectangular surface is formed at the bottom of the mold, said surface being parallel to the longitudinal direction of the hardmask opening. In any embodiment of the method of producing a probe according to the invention, the steps of releasing the probe tip from the mold, and of attaching said tip to a cantilever can take place according to known techniques for producing pyramidal tips.

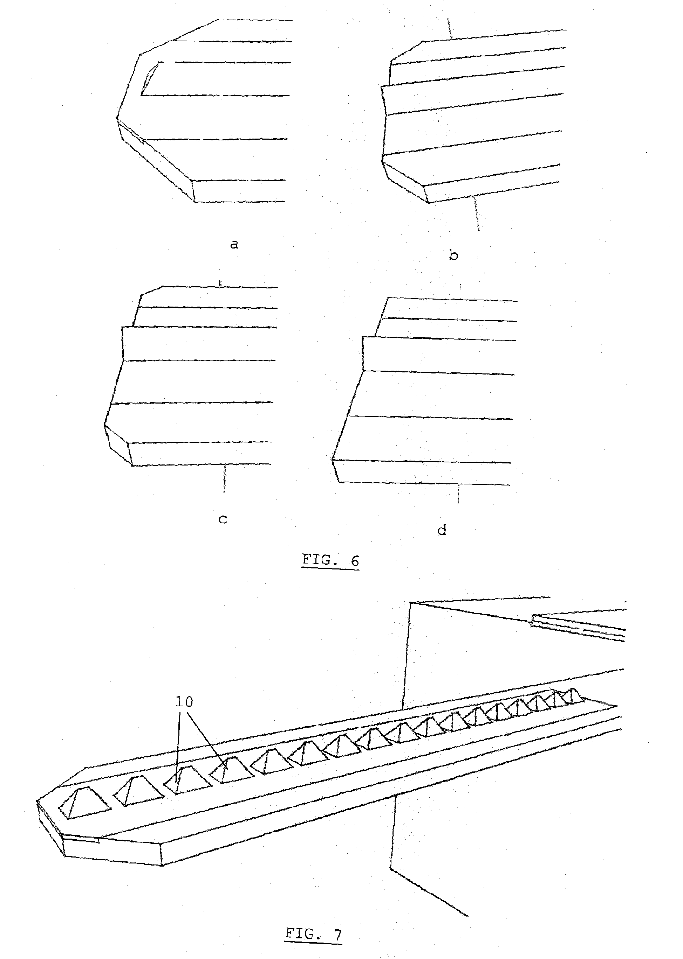

According to another embodiment, the tip can be made to extend along a large portion of the cantilever length, see figure 5. Preferably in this case, the tip 10 has a straight line-shaped edge 11, oriented parallel to the cantilever direction. This embodiment allows to produce a re-usable probe, as illustrated in figure 6a-6d. When the distal tip point 18 of the probe is worn off through usage, the distal end 3 of the cantilever can be sliced off by a suitable cutting process, for example a focused ion beam (FIB), thereby generating another sharp tip portion. This process can be repeated and hence leads to the concept of a reusable AFM tip. The cutting means can be integrated in the AFM apparatus (e.g. a vacuum AFM with attached FIB column) or the slicing is done separately, e.g. in a separate FIB system. The main advantage of such a configuration is that when integrated in one system, it saves probe exchange time and laser/detector alignment time. In this embodiment also, the tip may be put at an angle with respect to the longitudinal direction of the cantilever (as in figure 3a). This concept allows also to adjust the spring constant of the cantilever by cutting off part of the cantilever length if a higher spring constant is needed. In the state-of-the-art configurations, for every application with a specific force range there is also a specific probe required. This embodiment of the invention is more cost-efficient as it requires only one probe type to be manufactured and the fine adjustment may be done by FIB. To facilitate FIB milling, another embodiment comprises short segments of straight-edged tips 10 placed in a row along a portion of the length of the cantilever (figure 7). When the outermost probe tip segment is worn out, a portion of the cantilever is milled away by cutting in between two tip segments 10. The individual tip segments can also be placed at an angle with respect to the cantilever's longitudinal direction.

The tip material of a probe according to the invention may be any suitable material other than diamond, e.g. metal, metal alloy, silicon nitride, silicon oxide, silicon, polymer.

In the enclosed drawings, the cantilever is shaped as a single beam. The invention is not limited to such a cantilever, but can be applied in combination with other suitable cantilever shapes, e.g. V-shaped or tapered cantilevers. The 'longitudinal direction' in each case is the direction in which the cantilever as a whole extends from the holder chip.

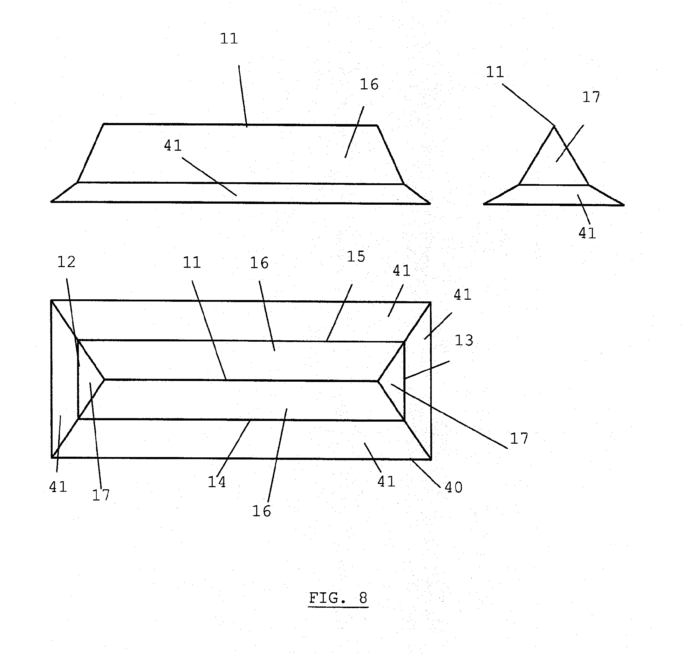

According to an embodiment, the mold can be sharpened before filling it with the tip material, e.g. by a low temperature oxidation step. In this way, a sharper tip and/or a tip with a high aspect ratio can be obtained. A preferred technique for producing such a sharpened tip is described in 'Low temperature thermal oxidation sharpening of microcast tips', Akamine et al, J. Vac. Sci. Technol. B10(5), Sep/Oct 1992. This technique involves the growth of a non-uniform low temperature thermal oxide on the surface of a pyramidal mold produced in a silicon substrate. The tip material is then deposited onto the silicon oxide layer. Due to the non-uniform thickness of the oxide, a sharper tip is obtained at the bottom of the mold, and hence also on the probe tip. This technique is usable as such in the case when the mold is obtained by anisotropic wet etching through a rectangular or ellipse-shaped hardmask as is the case in the present invention. The result is a tip with a body as illustrated in figure 8, which shows the tip in 3 orthogonal views. In this case, the above-described tip-shape is again recognized as the top portion of the tip body : the line-shaped straight edge 11, the rectangular ground plane formed by short sides 12,13 and long sides 14,15, the trapezoidal side surfaces 16 and triangular side surfaces 17. Underneath said tip-shape, the tip body comprises a base portion with a rectangular ground plane 40 and four trapezoidal side surfaces 41, the inclination of said side surfaces being less steep than the inclination of the side surfaces 16 and 17 of the tip's top portion. The base portion has a top surface in the shape of a rectangular plane, which is the ground plane of the top portion. A sharper tip edge 11 can thus be obtained. This embodiment can be positioned parallel to the cantilever's longitudinal direction or at an angle of said direction (analogue to figures 2 and 3. This embodiment of the tip can also have a rectangular plane at the top instead of a sharp line, in analogy with the embodiment of figure 4. So the embodiment of figure 8 is an example of a probe according to the invention wherein the tip comprises not only the top portion 10 or 10' referred to in the appended claims, but also a base portion.

It has been found by the inventors, that in a probe tip according to the invention produced from diamond, and produced by filling a mold, diamond nano-particles are present on the contact point 18 (preferably also on the opposite point 19). These nano-crystals make it possible to obtain with the probe of the invention a resolution in the order of 1nm. In the case of the tip as shown in figure 4, nano-crystals are present at least on the contact point 22.

The tip of the invention obtained without additional sharpening of the mold is preferably used in electrical AFM measurements, such as SSRM, where the sample surface has low roughness. The use of the probe in contact or intermittent contact AFM measurements is however also possible, especially when the probe tip is sharpened through sharpening of the mold.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A probe for surface analysis by Atomic Force Microscopy, comprising:
• a holder chip (5),
• a cantilever (1) having a base end (4) attached to said holder chip and a distal end (3) extending away from said holder chip,
• a probe tip, said probe tip being arranged near the distal end (3) of the cantilever (1),
wherein said probe tip is shaped as a solid body comprising at least a top portion (10), said top portion comprising:
• a rectangular ground plane, said ground plane having two long sides (14,15) and two short sides (12,13), a first short side (12) being placed closer to the distal end (3) of the cantilever, and a second short side (13) being placed further away from said cantilever's distal end (3),
• a straight line-shaped edge (11), oriented parallel to said long sides (14,15),
• two trapezoidal side surfaces (16) extending between the line-shaped edge (11) and the long sides (14,15) of the ground plane, and two triangular side surfaces (17) extending between the end points (18,19) of the line-shaped edge (11) and the short sides (12,13) of the ground plane, the end point (18) closest to the cantilever's distal end being suitable for forming the contact point of the probe when the probe is placed in contact with a surface (30) to be analysed.

2. Probe according to claim 1, wherein said rectangular ground plane is oriented in the cantilever's longitudinal direction.

3. Probe according to claim 1, wherein said ground plane is oriented at an angle to the cantilever's longitudinal direction.

4. A probe for surface analysis by Atomic Force Microscopy, comprising:
• a holder chip (5),
• a cantilever (1) having a base end (4) attached to said holder chip and a distal end (3) extending away from said holder chip,
• a probe tip, said probe tip being arranged near the distal end (3) of the cantilever,
wherein said probe tip is shaped as a solid body comprising at least a top portion (10'), said top portion comprising:
• a rectangular ground plane, said ground plane having two long sides and two short sides (12,13), a first short side (12) being placed closer to the distal end (3) of the cantilever, and a second short side (13) placed further away from said cantilever's distal end, said rectangular ground plane being oriented at an angle to the longitudinal direction of the cantilever (1),
• a rectangular top surface (20) in a plane parallel to the ground plane, and having long sides and short sides being respectively parallel to the long sides and short sides of the ground plane, ,
• four trapezoidal side surfaces (21) extending between the rectangular top surface (20) and the ground plane, wherein the corner point (22) of said rectangular top surface (20) that is closest to the cantilever's distal end (3) is suitable for forming the contact point of the probe when the probe is placed in contact with a surface (30) to be analysed.

5. Probe according to any one of claims 1 to 4, wherein the length of said straight line-shaped edge (11) or of said rectangular top surface (20) is at least 0.1micron.

6. Probe according to any one of claims 1 to 4, wherein said probe is re-usable by cutting off a portion of the tip (10,10') and cantilever (1) at the distal end (3) of said cantilever.

7. Probe according to any one of claims 1 to 4, comprising a plurality of said probe tips (10,10') placed in a row oriented in the cantilever's longitudinal direction, and wherein the probe is re-usable by cutting off a portion of the cantilever, in between two adjacent probe tips (10).

8. Probe according to any one of the preceding claims, wherein said tip further comprises a base portion, having a rectangular base plane (40), four trapezoidal side surfaces (41) and a rectangular top plane, said top plane forming the ground plane of said top portion (10,10'), said four trapezoidal side surfaces (41) being inclined at a less steep angle than the side surfaces (16,17;21) of the top portion (10,10').

9. Probe according to any one of the preceding claims, wherein said probe tip is a diamond probe tip, and wherein diamond nano-crystals are present on the end point (18) of said line-shaped edge (11) which is closest to the distal end (3) of the cantilever (1) or on the corner point (22) of said rectangular top surface (20) which is closest to the distal end (3) of the cantilever (1).

10. Method for producing a probe for atomic force microscopy, comprising the steps of :
• providing a substrate,
• producing a mold in said substrate, by wet anisotropic etching, using a hardmask having a rectangular or ellipse-shaped opening, wherein said etching is continued until a line or a elongate rectangular surface is formed at the bottom of said mold, said line or said elongate surface being parallel to the longitudinal direction of said rectangular or ellipse-shaped opening,
• filling said mold with tip material to form a tip,
• removing said tip from said mold,
• attaching said tip to a cantilever (1).

11. Method according to claim 10, wherein the length of said line or said elongate rectangular surface is at least 0.1micron.

12. Method according to claim 10 or 11, wherein said tip is attached to the cantilever so that said line or said elongate rectangular surface is at an angle to the longitudinal direction of the cantilever (1).

13. Method according to claim 10 or 11, wherein a line is formed in the bottom of said mold, and wherein said tip is attached to the cantilever so that said line is parallel to the longitudinal direction of the cantilever (1).

14. Method according to any one of claims 10 to 13, further comprising the step of sharpening the tip of said mold, prior to the step of filling said mold with tip material.

15. An apparatus for Atomic Force Microscopy, wherein a probe according to claim 6 or 7 can be applied, said apparatus being equipped with a means for cutting off a portion of said probe.
